# EUROPÄISCHE PATENTSCHRIFT

(11) **EP 0 926 036 B1**
(45) Veröffentlichungstag und Bekanntmachung des Hinweises auf die Patenterteilung: **06.08.2003**
(21) Anmeldenummer: 98123327.3
(22) Anmeldetag: 08.12.1998
(51) Int. Cl.: B61D 17/00, B61D 17/08, B62D 29/04

(54) **Wagenkasten eines Schienenfahrzeuges**
Body of a railway vehicle
Caisse d'un véhicule ferroviaire

(30) Priorität: 18.12.1997 DE 19756439
(43) Veröffentlichungstag der Anmeldung: 30.06.1999
(73) Patentinhaber: SIEMENS AKTIENGESELLSCHAFT, 80333 München (DE)
(72) Erfinder: Meyer, Gerd, Dr.-Ing., 51375 Leverkusen (DE); Calomfirescu, Mikail, Dipl.-Ing., 45359 Essen (DE)

(56) Entgegenhaltungen:
- EP-A- 0 605 366
- DE-A- 1 580 992
- DE-A- 3 612 579
- FR-A- 2 760 397

## Beschreibung

Die Erfindung betrifft einen Wagenkasten eines Schienenfahrzeuges, mit einer Bodenplatte, Stirnwänden, Seitenwänden und einem Dach, wobei die jeweilige Seitenwand Fenstersäulen und zumindest ein Hohlkammerprofil aus Faserverbundwerkstoff enthält, das eine Außenwandung, eine Innenwandung und diese beiden Wandungen verbindende Stege aufweist.

Der Wagenkasten moderner Schienenfahrzeuge wird auch aus Gewichtsgründen in einer Aluminium-Integralbauweise erstellt, bei der größere Strangpreßprofile miteinander durch Schweißen verbunden sind. Wie beispielsweise dem in der Zeitschrift ZEV + DET Glas. Ann. 119 (1995) Nr. 6 Juni Seiten 193 bis 202 erschienenen Aufsatz "Leichtbau von Schienenfahrzeugen" zu entnehmen ist, hat der in Bild 46 gezeigte Aluminium-Wagenkasten im wesentlichen aus vier längsdurchlaufenden Strangpreßprofilen und Fenstersäulen bestehende Seitenwände.

Durch die EP-A1-0 605 366 ist ein Wagenkasten für Schienenfahrzeuge bekannt, bei dem der Boden, die Seitenwände und das Dach jeweils durch Paneelen gebildet sind, die in ihrer Länge derjenigen des Wagenkastens entsprechen. Diese Paneele, die aus Faserverbundwerkstoff bestehen können, weisen eine Innenwandung, eine Außenwandung und diese Wandungen verbindende Stege auf, die in Wagenlängsrichtung verlaufen.

Speziell für den Einsatz im Hochgeschwindigkeitsverkehr ist die Steifigkeit des Wagenkastens wichtig. Es werden möglichst hohe Eigenfrequenzen angestrebt, um insbesondere bei Großraumwagen und größeren Geschwindigkeiten Schwingungen des Daches zu vermeiden, die den Fahrkomfort durch brummende Geräusche mindern können. Dies erfordert eine entsprechende Steifigkeit des Wagenkastens gerade in Querrichtung, wobei jedoch diesbezüglich die Fenstersäulen und deren Anbindung an die benachbarte Struktur der Seitenwand stets als Schwachpunkte gelten.

Der Erfindung liegt die Aufgabe zugrunde, einen Wagenkasten der gattungsgemäßen Art so zu gestalten, daß bei möglichst geringem Gewicht und kostengünstiger Herstellbarkeit eine wesentlich höhere Steifigkeit in Querrichtung erreichbar ist.

Diese Aufgabe wird erfindungsgemäß durch die kennzeichnenden Merkmale von Anspruch 1 gelöst, daß die Seitenwand in ihrer vollständigen Länge oder eine jeweilige Längssektion der Seitenwand durch ein einteiliges, die Fenstersäulen umfassendes Hohlkammerprofil gebildet ist, dessen Stege senkrecht angeordnet sind.

Im Unterschied zu der herkömmlichen Aluminium-Bauweise, bei der die Stege des Hohlkammerprofils in Fahrzeuglängsrichtung verlaufen, sind nach der Erfindung die Stege des Hohlkammerprofils senkrecht durchlaufend zwischen der Bodenplatte und dem Dach angeordnet. Daraus resultiert bei geringem Gewicht eine wesentlich höhere Steifigkeit in Querrichtung, vor allem im Bereich der Fenstersäulen, so daß für den Fahrkomfort kritische Querschwingungen erheblich reduziert werden.

Außerdem liegt ein beachtlicher Vorteil in der Möglichkeit, die Seitenwände bei der Herstellung des Hohlkammerprofils durch die in der Kunststofftechnik gängigen Verfahren - beispielsweise RTM-Verfahren (Resin Transfer Molding) - in Fahrzeugquerrichtung beliebig gewölbt auszubilden. Das Bild 46 der eingangs zitierten Zeitschrift zeigt einen Wagenkasten mit gewölbten Seitenwänden, die in Aluminium-Bauweise allerdings nur mit Stegen in Fahrzeuglängsrichtung realisierbar sind (Ein Hohlkammerprofil aus Aluminium mit angenommen senkrecht verlaufenden Stegen ist in Querrichtung praktisch nicht verformbar.). Im Vergleich zu Aluminium sind bei dem Gegenstand nach der Erfindung durch den Einsatz von Faserverbundwerkstoff im übrigen die Wärmedämmung, die akustischen Eigenschaften und das Verhalten im Falle eines Crashs verbessert.

Vorteilhafte Ausgestaltungen der Erfindung sind in den Unteransprüchen angegeben.

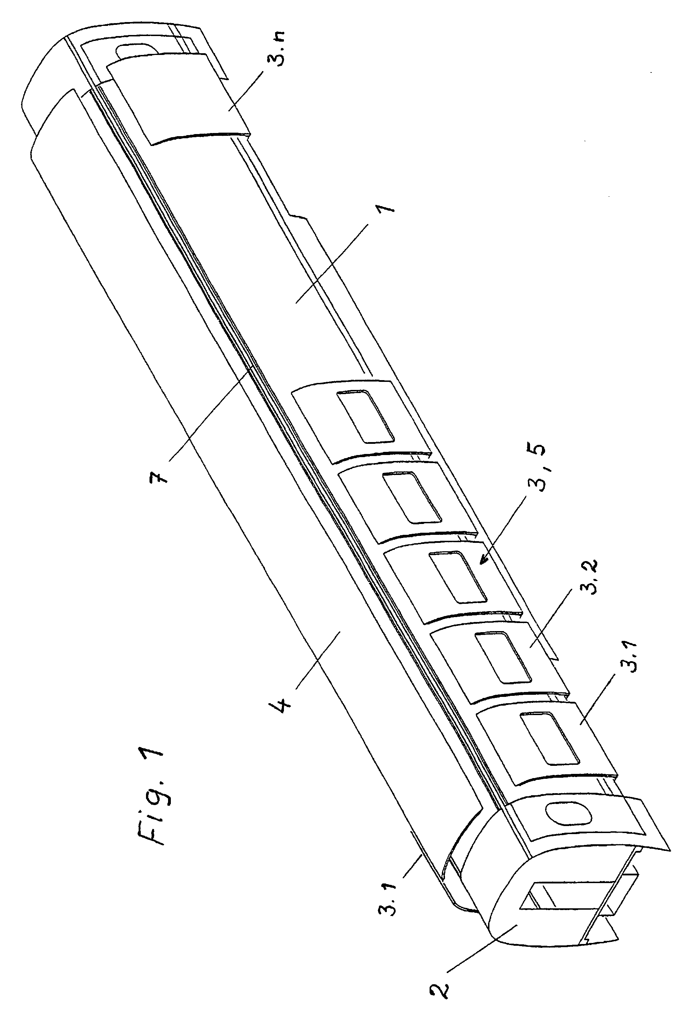

Im weiteren wird die Erfindung anhand eines in der Zeichnung schematisch dargestellten Ausführungsbeispiels näher beschrieben. Es zeigen
- Fig. 1: den Wagenkasten eines Schienenfahrzeuges in perspektivischer Ansicht,
- Fig. 2: einen Teilbereich der Bodenplatte und einer Sektion der Seitenwand des Wagenkastens nach Fig. 1 im vergrößerten Maßstab,
- Fig. 3: den Bereich der Verbindung zwischen der Bodenplatte und der Sektion der Seitenwand im Querschnitt,
- Fig. 4 - 6: jeweils unterschiedliche Gestaltungsmöglichkeiten der Seitenwandsektion im Schnitt nach der Linie A - A in Fig. 2.

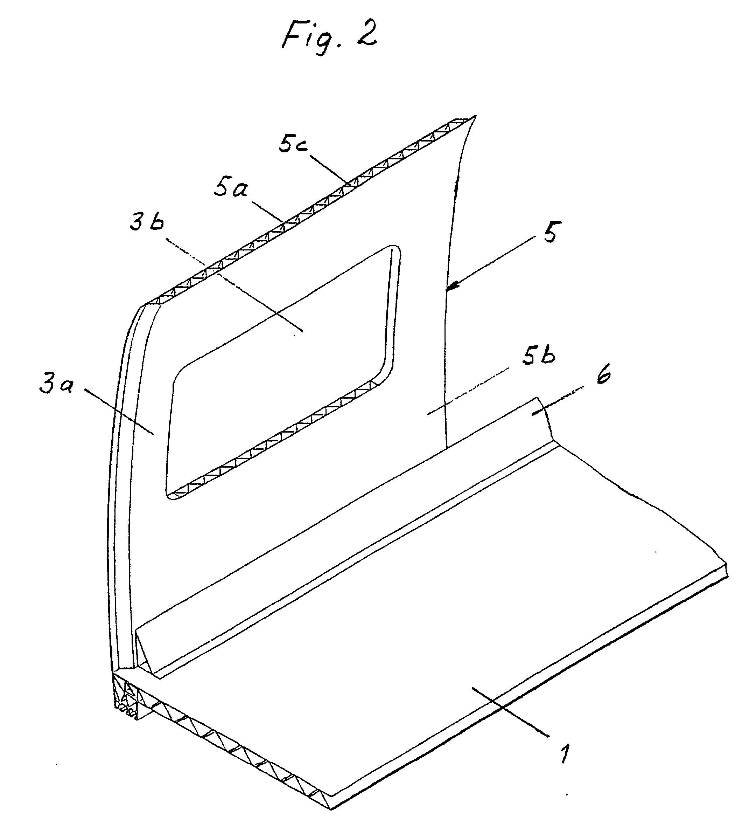

Der Wagenkasten hat eine Bodenplatte 1 und Stirnwände 2, die bevorzugt aus Aluminium-Strangpreßprofilen zusammengesetzt sind. Aus Aluminium können auch im oberen Bereich des Wagenkastens seitliche angeordnete Längsträger 7 bestehen. Das Dach 4 ist aus einer Sandwichplatte hergestellt, die z. B. in Harz eingebettete Kohlenstoffasern und Hartschaum aufweist. Die Seitenwände 3 enthalten Längssektionen 3.1., 3.2 bis 3.n, die jeweils aus einem einteiligen Hohlkammerprofil 5 aus Faserverbundstoff mit Fasern aus Kohlenstoff oder Glas bestehen. Die in Fahrzeugquerrichtung gewölbten Hohlkammerprofile 5 umfassen jeweils Fenstersäulen 3a und einen Fensterausschnitt 3b. Die in den Hohlkammerprofilen 5 angeordneten Stege 5.c verlaufen senkrecht zwischen der Bodenplatte 1 und dem Dach 4 (siehe Fig. 2).

Alternativ zu der vorbeschriebenen Bauweise mit Längssektionen kann jede Seitenwand 3 in ihrer vollständigen Länge durch ein einziges Hohlkammerprofil 5 gebildet sein, was keiner gesonderten Darstellung bedarf.

Jedes Hohlkammerprofil 5 weist eine Außenwandung 5a, eine Innenwandung 5b und die diese Wandungen 5a, 5b verbindenden Stege 5c auf. Wie ersichtlich, stellen diese Wandungen 5a, 5b und die Stege 5c Dreieckkammer-Konstruktionen dar, die das beste Verhältnis von Gewicht und Steifigkeit erbringen. Die dreieckförmigen Räume können mit einem Werkstoff gefüllt sein, der gute Eigenschaften in bezug auf Wärme- und Schallisolierung und/oder Absorption von Energie besitzt.

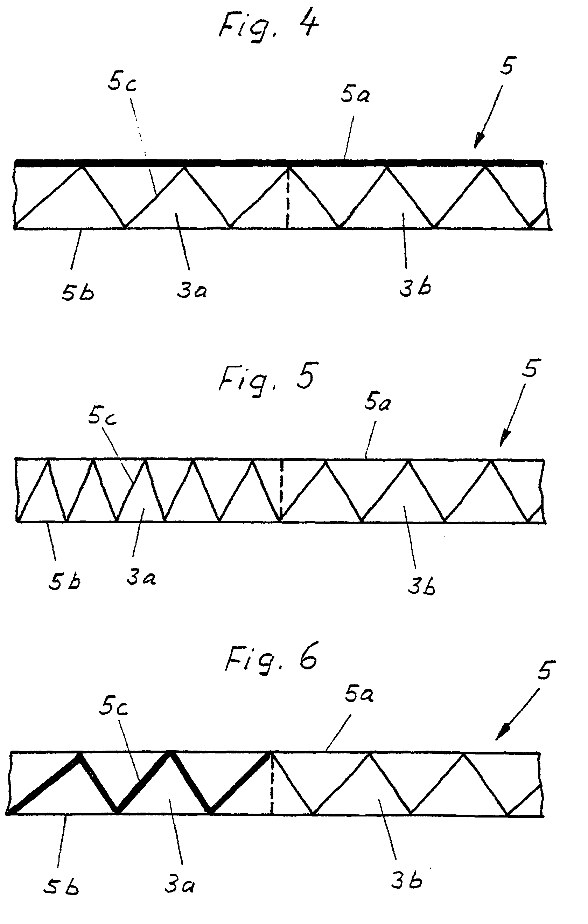

Die in den Fig. 4 bis 6 gezeigten Gestaltungsmöglichkeiten des Hohlkammerprofils 5 ermöglichen es, dessen Steifigkeit gezielt zu variieren. Gemäß Fig. 4 hat die Außenwandung 5a eine größere Wanddicke als die Innenwandung 5b, wodurch die Seitenwand 3 insbesondere gegenüber Vandalismus widerstandsfähiger ist. Im Beispiel nach Fig. 5 weist das Hohlkammerprofil 5 im Bereich der Fenstersäule 3a eine höhere Anzahl von Stegen 5c auf als im Bereich des neben der Fenstersäule 3a befindlichen Fensterausschnittes 3b. Wie in Fig. 6 dargestellt ist, haben die Stege 5c des Hohlkammerprofils 5 im Bereich der Fenstersäule 3a eine größere Wanddicke als die Stege im Bereich des benachbarten Fensterausschnittes 3b. Es versteht sich, daß die vorbeschriebenen Ausführungsformen nach Fig. 4 bis 6 miteinander kombinierbar sind.

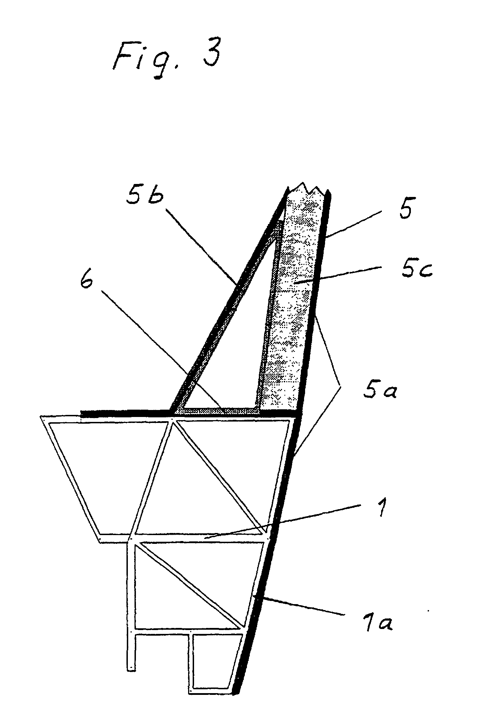

Das die jeweilige Längssektion 3.1 bis 3.n bildende Hohlkammerprofil 5 wird durch Kleben biegesteif an die Bodenplatte 1 angeschlossen. Dabei empfiehlt es sich, im Verbindungsbereich des Hohlkammerprofils 5 mit der Bodenplatte 1 ein in Fahrzeuglängsrichtung verlaufendes Verstärkungsprofil 6 - bevorzugt ein Pultrudat - anzuordnen, um die Fügefläche zu vergrößern. Wie in Fig. 3 gezeigt ist, kann dieses Verstärkungsprofil 6 in das Hohlkammerprofil 5 einlaminiert sein. Ebenfalls zum Erzielen einer möglichst großen Fügefläche ist die Außenwandung 5a des Hohlkammerprofils 5 nach unten verlängert und an die seitliche Außenfläche 1a der Bodenplatte 1 angepaßt.

### Liste der Bezugszeichen

- 1: Bodenplatte
- 1a: seitliche Außenfläche
- 2: Stirnwand
- 3: Seitenwand
- 3.1: Längssektion 1
- 3.2: Längssektion 2
- 3.n: Längssektion n
- 3a: Fenstersäule
- 3b: Fensterausschnitt
- 4: Dach
- 5: Hohlkammerprofil der Seitenwand
- 5a: Außenwandung
- 5b: Innenwandung
- 5c: Steg
- 6: Verstärkungsprofil
- 7: oberer Längsträger

## Patentansprüche

1. Wagenkasten eines Schienenfahrzeuges, mit einer Bodenplatte (1), Stirnwänden (2), Seitenwänden (3) und einem Dach (4), wobei die jeweilige Seitenwand (3) Fenstersäulen (3a) und zumindest ein Hohlkammerprofil (5) aus Faserverbundwerkstoff enthält, das eine Außenwandung (5a), eine Innenwandung (5b) und diese beiden Wandungen (5a, 5b) verbindende Stege (5c) aufweist, **dadurch gekennzeichnet, dass** die Seitenwand (3) in ihrer vollständigen Länge oder eine jeweilige Längssektion (3.1, 3.2, 3.n) der Seitenwand (3) durch ein einteiliges, die Fenstersäulen (3a) umfassendes Hohlkammerprofil (5) gebildet ist, dessen Stege (5c) senkrecht angeordnet sind.

2. Wagenkasten nach Anspruch 1, **dadurch gekennzeichnet, daß** die Außenwandung (5a), die Innenwandung (5b) und die Stege (5c) des Hohlkammerprofils (5) eine Dreieckkammer-Konstruktion darstellen.

3. Wagenkasten nach Anspruch 1 oder 2, **dadurch gekennzeichnet, daß** die Außenwandung (5a) des Hohlkammerprofils (5) eine größere Wanddicke aufweist als dessen Innenwandung (5b).

4. Wagenkasten nach einem der Ansprüche 1 bis 3, **dadurch gekennzeichnet, daß** das Hohlkammerprofil (5) im Bereich der Fenstersäulen (3a) eine höhere Anzahl von Stegen (5c) aufweist als im Bereich des zwischen den Fenstersäulen (3a) befindlichen Fensterausschnittes (3b).

5. Wagenkasten nach einem der Ansprüche 1 bis 4, **dadurch gekennzeichnet, daß** die Stege (5c) des Hohlkammerprofils (5) im Bereich der Fenstersäulen (3a) eine größere Wanddicke haben als die Stege (5c) im Bereich des zwischen den Fenstersäulen (3a) befindlichen Fensterausschnittes (3b).

6. Wagenkasten nach einem der Ansprüche 1 bis 5, **dadurch gekennzeichnet, daß** zwischen der Außenwandung (5a), der Innenwandung (5b) und benachbarten Stegen (5c) des Hohlkammerprofils (5) bestehende, z. B. dreieckförmige Räume mit einem Werkstoff gefüllt sind, der gute Eigenschaften in bezug auf Wärme- und Schallisolierung und/oder Absorbtion von Energie besitzt.

7. Wagenkasten nach einem der Ansprüche 1 bis 6, **dadurch gekennzeichnet, daß** das Hohlkammerprofil (5) der Seitenwand (3) bzw. deren jeweilige Längssektion (3.1 bis 3.n) durch Kleben biegesteif an der Bodenplatte (1) angeschlossen ist.

8. Wagenkasten nach Anspruch 7, **dadurch gekennzeichnet, daß** die Außenwandung (5a) des Hohlkammerprofils (5) zum Erzielen einer möglichst großen Fügefläche nach unten verlängert und an die seitliche Außenfläche (1a) der Bodenplatte (1) angepaßt ist.

9. Wagenkasten nach Anspruch 8, **dadurch gekennzeichnet, daß** im Verbindungsbereich des Hohlkammerprofils (5) und der Bodenplatte (1) ein in Fahrzeuglängsrichtung verlaufendes Verstärkungsprofil (6) - vorzugsweise ein Pultrudat - angeordnet ist.

10. Wagenkasten nach Anspruch 9, **dadurch gekennzeichnet, daß** das Verstärkungsprofil (6) in das Hohlkammerprofil (5) einlaminiert ist.

## Claims

1. Body of a railway vehicle, with a base plate (1), end walls (2), side walls (3) and a roof (4), the respective side wall (3) including window pillars (3a) and at least one hollow-chamber profile (5) of fibre composite material, which has an outer wall (5a), an inner wall (5b) and webs (5c) connecting these two walls (5a, 5b), **characterized in that** the side wall (3) is formed in its entire length or a respective longitudinal section (3.1, 3.2, 3.n) of the side wall (3) is formed by a one-part hollow-chamber profile (5) which encloses the window pillars (3a) and the webs (5c) of which are arranged vertically.

2. Body according to Claim 1, **characterized in that** the outer wall (5a), the inner wall (5b) and the webs (5c) of the hollow-chamber profile (5) represent a triangular-chamber construction.

3. Body according to Claim 1 or 2, **characterized in that** the outer wall (5a) of the hollow-chamber profile (5) has a greater wall thickness than its inner wall (5b).

4. Body according to one of Claims 1 to 3, **characterized in that** the hollow-chamber profile (5) has a greater number of webs (5c) in the region of the window pillars (3a) than in the region of the window cutout (3b) located between the window pillars (3a).

5. Body according to one of Claims 1 to 4, **characterized in that** the webs (5c) of the hollow-chamber profile (5) in the region of the window pillars (3a) have a greater wall thickness than the webs (5c) in the region of the window cutout (3b) located between the window pillars (3a).

6. Body according to one of Claims 1 to 5, **characterized in that** spaces, for example triangular spaces, existing between the outer wall (5a), the inner wall (5b) and adjacent webs (5c) of the hollow-chamber profile (5) are filled with a material which has good properties with respect to heat and sound insulation and/or absorption of energy.

7. Body according to one of Claims 1 to 6, **characterized in that** the hollow-chamber profile (5) of the side wall (3) or its respective longitudinal section (3.1 to 3.n) is connected in a flexurally rigid manner to the base plate (1) by adhesion.

8. Body according to Claim 7, **characterized in that**, to achieve as large a joining area as possible, the outer wall (5a) of the hollow-chamber profile (5) is extended downwards and adapted to the lateral outer area (1a) of the base plate (1).

9. Body according to Claim 8, **characterized in that** a reinforcing profile (6) - preferably a pultrudate - running in the longitudinal direction of the vehicle is arranged in the connecting region of the hollow-chamber profile (5) and the base plate (1).

10. Body according to Claim 9, **characterized in that** the reinforcing profile (6) is laminated into the hollow-chamber profile (5).

## Revendications

1. Caisse d'un véhicule ferroviaire, comportant une plaque (1) de fond, des parois (2) frontales, des parois (3) latérales et un toit (4), chaque paroi (3) latérale comprenant des montants (3a) de fenêtre et au moins un profilé (5) à compartiments creux en matériau composite renforcé par fibres, qui comporte une paroi (5a) extérieure, une paroi (5b) intérieure et des entretoises (5c) reliant ces deux parois (5a, 5b), **caractérisée en ce que** la paroi (3) latérale dans toute sa longueur, ou un tronçon (3.1, 3.2, 3.n) longitudinal respectif de la paroi (3) latérale, est formé par un profilé (5) à compartiments creux d'un seul tenant, entourant les montants (3a) de fenêtre et dont les entretoises (5c) sont disposées verticalement.

2. Caisse suivant la revendication 1, **caractérisée en ce que** la paroi (5a) extérieure, la paroi (5b) intérieure et les entretoises (5c) du profilé (5) à compartiments creux forment une construction à compartiments triangulaires.

3. Caisse suivant la revendication 1 ou 2, **caractérisée en ce que** la paroi (5a) extérieure du profilé (5) à compartiments creux possède une plus grande épaisseur de paroi que la paroi (5b) intérieure de ce profilé.

4. Caisse suivant l'une des revendications 1 à 3, **caractérisée en ce que** le profilé (5) à compartiments creux possède, dans la région des montants (3a) de fenêtre, un plus grand nombre d'entretoises (5c) que dans la région de la découpe (3b) de fenêtre située entre les montants (3a) de fenêtre.

5. Caisse suivant l'une des revendications 1 à 4, **caractérisée en ce que** les entretoises (5c) du profilé (5) à compartiments creux dans la région des montants (3a) de fenêtre possèdent une plus grande épaisseur de paroi que les entretoises (5c) dans la région de la découpe (3b) de fenêtre située entre les montants (3a) de fenêtre.

6. Caisse suivant l'une des revendications 1 à 5, **caractérisée en ce que** les chambres, par exemple triangulaires, présentes entre la paroi (5a) extérieure, la paroi (5b) intérieure et des entretoises (5c) voisines du profilé (5) à compartiments creux sont remplies d'un matériau qui possède de bonnes propriétés d'isolation thermique et acoustique et/ou d'absorption d'énergie.

7. Caisse suivant l'une des revendications 1 à 6, **caractérisée en ce que** le profilé (5) à compartiments creux de la paroi (3) latérale ou du tronçon (3.1 à 3.n) longitudinal respectif de cette paroi latérale est raccordé rigidement en flexion à la plaque (1) de fond, par collage.

8. Caisse suivant la revendication 7, **caractérisée en ce que** la paroi (5a) extérieure du profilé (5) à compartiments creux est, afin d'obtenir une surface de joint la plus grande possible, prolongée vers le bas et adaptée à la face (1a) extérieure latérale de la plaque (1) de fond.

9. Caisse suivant la revendication 8, **caractérisée en ce qu'**un profilé (6) de renforcement - de préférence obtenu par pultrusion - s'étendant dans la direction longitudinale du véhicule est disposé dans la région d'assemblage du profilé (5) à compartiments creux et de la plaque (1) de fond.

10. Caisse suivant la revendication 9, **caractérisée en ce que** le profilé (6) de renforcement est laminé dans le profilé (5) à compartiments creux.
